# EUROPEAN PATENT SPECIFICATION

(11) **EP 3 511 810 B1**
(45) Date of publication and mention of the grant of the patent: **24.01.2024**
(21) Application number: 16915732.8
(22) Date of filing: 09.09.2016
(51) Int. Cl.: G06F 3/04817, B23Q 1/00, B23Q 17/00, G09B 5/02, G09B 19/24

(54) **ELECTRONIC MANUAL FOR MACHINE TOOL**
ELEKTRONISCHES HANDBUCH FÜR WERKZEUGMASCHINE
MANUEL ÉLECTRONIQUE POUR MACHINE-OUTIL

(43) Date of publication of application: 17.07.2019
(73) Proprietor: Makino Milling Machine Co., Ltd., Tokyo 152-8578 (JP)
(72) Inventor: ICHIMURA, Kayoko, Yamanashi 401-0310 (JP); NAGATOMO, Tomofumi, Kanagawa 243-0303 (JP)
(74) Representative: McWilliams, David John
(86) International application number: PCT/JP2016/076703
(87) International publication number: WO 2018/047314

(56) References cited:
- EP-A1- 1 898 286
- WO-A2-02/46849
- JP-A- 2013 097 742
- JP-A- 2014 194 771
- JP-A- 2016 081 338
- US-A- 6 167 394
- US-A1- 2010 299 304

## Description

### FIELD

The present invention relates to an electronic manual for a machine tool for displaying information related to the operation, maintenance, or inspection of the machine tool, which is necessary for an operator, and a machine tool which can display the electronic manual.

### BACKGROUND

Since machine tools have a wide variety of specifications, mechanisms, functions, and target groups which are complicated, the instruction manuals therefor become enormous. A certain degree of skill is necessary in order to find necessary information in such an enormous instruction manual, and some users cannot obtain necessary information even while in possession of the instruction manual. Furthermore, machine tools are generally used for long periods of time, during which parts are improved on the manufacturer side and new products can be used for the lubricating oils and coolants thereof, which are consumables.

Patent Literature 1 describes a machining device in which an input screen for inputting operation items is displayed on a display monitor of the machining device by means of the reading of identification codes recorded in an instruction manual with a reader connected to the controller of the machining device.

### [CITATION LIST]

### [PATENT LITERATURE]

[PTL 1] Japanese Unexamined Patent Publication (Kokai) No. 2014-24150

### SUMMARY

### [TECHNICAL PROBLEM]

In the machining device of Patent Literature 1, the time and effort of the inputting of maintenance information are reduced, and maintenance information can be accurately inputted in a short time. There are various types of maintenance, and the individual maintenance operations have different operation methods and time intervals at which the maintenance should be performed. Even in the machining device of Patent Literature 1, in order to ultimately obtain maintenance information, a keyword is necessary to search the electronic manual. Thus, it is necessary that the operator be familiar with the handling of the machine tool and/or the instruction manual. In such a case, proper keywords cannot be input simply by simplifying input as in Patent Document 1, whereby proper maintenance information cannot be obtained.

A known example of a system and device for providing online assistance for the operation of a computer-controlled machine is described in WO/0246849 A2.

In order to solve such problems of the prior art, the present invention aims to provide an electronic manual for a machine tool which can display information related to the operation, maintenance, or inspection of the machine tool in a simple manner depending on the state of the operator, even if an operator, who is not familiar with the handling of the machine tool and/or the instruction manual, is not familiar with the unique names of the parts of the machine tool, and to provide a machine tool which can display such an electronic manual.

### [SOLUTION TO PROBLEM]

In order to achieve the above object, according to the present invention, there is provided an electronic manual for a machine tool as defined in claim 1.

### [ADVANTAGEOUS EFFECTS OF INVENTION]

According to the present invention, even if an operator, who is not familiar with the handling of the machine tool and/or the instruction manual, is not familiar with the unique names of the components of the machine tool, by displaying the appearance of the machine tool, displaying point icons on each component thereof, and tapping a point icon, necessary information related to the handling of the machine tool can be obtained.

### BRIEF DESCRIPTION OF DRAWINGS

FIG. 1 is a side view of a machine tool according to an embodiment of the present invention.

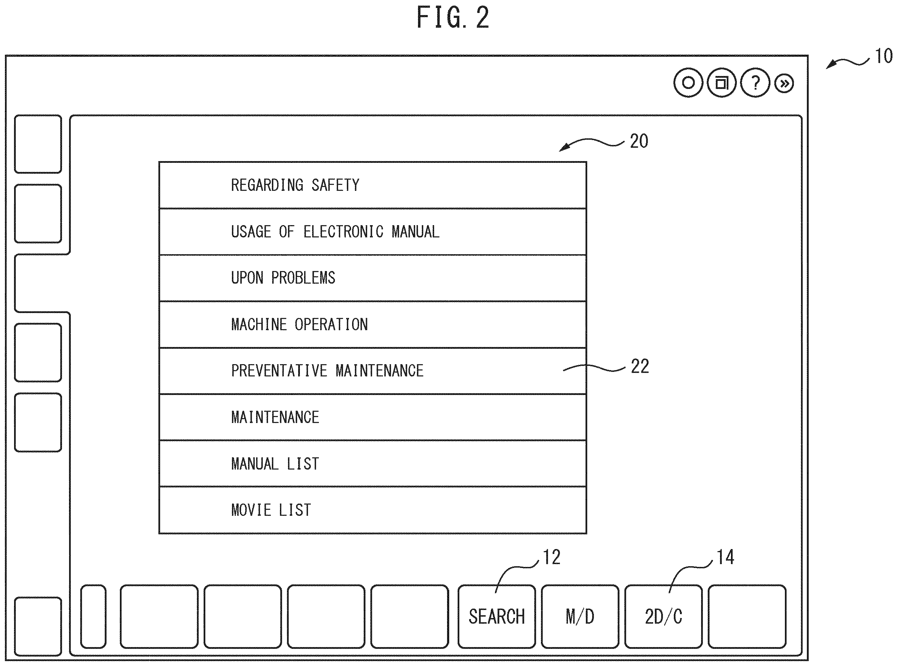

FIG. 2 is a view showing an example of a search window displayed on the display part.

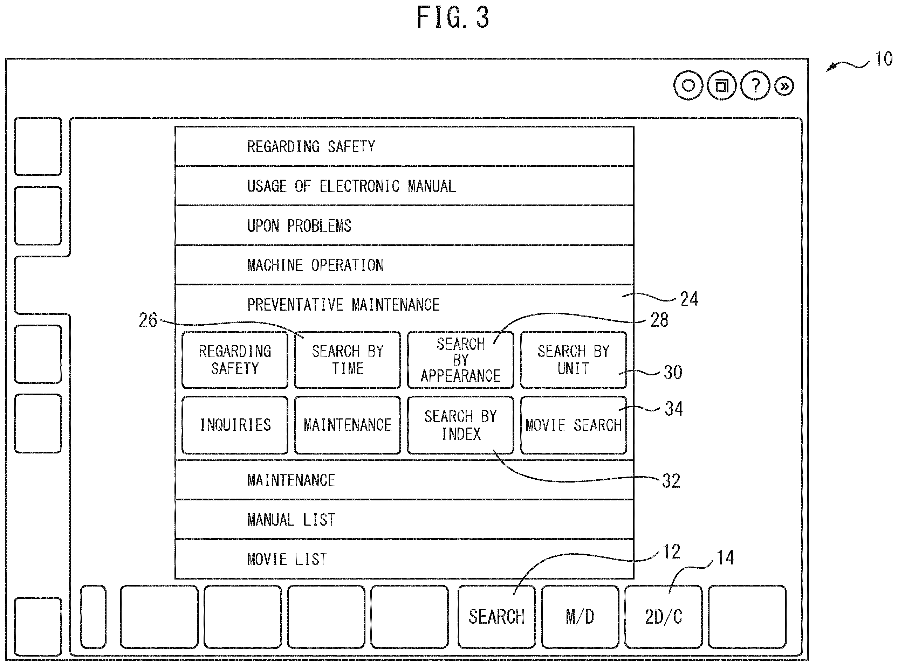

FIG. 3 is a view showing an example of a search method selection window displayed on the display part.
FIG. 4 is a view showing an example of an appearance search window.
FIG. 5 is a view showing an example of an appearance search window in which the machine tool as viewed from an angle different from FIG. 4 is displayed.
FIG. 6 is a view showing an example of an appearance search window in which the machine tool as viewed from yet another angle is displayed.
FIG. 7 is a view showing an example of an appearance search window in which the machine tool as viewed from yet another angle is displayed.
FIG. 8 is a view showing an example of an appearance search window in which the interior of an opened tool magazine is displayed.
FIG. 9 is a view showing an example of an appearance search window in which the interior of an opened tool magazine is displayed.

### DESCRIPTION OF EMBODIMENTS

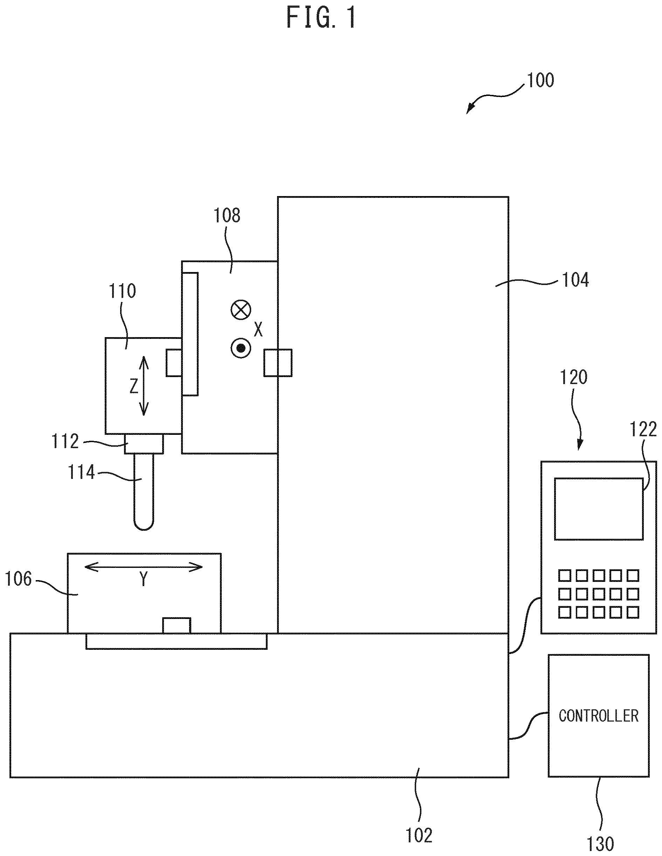

FIG. 1 shows an example of a machine tool to which the present invention is applied. In FIG. 1, the machine tool 100 according to a preferred embodiment of the present invention constitutes a vertical machining center which is controlled by a controller 130. The machine tool 100 comprises a bed 102 as a base fixed to the floor surface of a factory, a table 106 which is provided on an upper surface of a front portion (left side in FIG. 1) of the bed 102 so as to be moveable in the forwards and backwards directions or the Y-axis directions (the left and right directions in FIG. 1) and on which a workpiece W is fixed, an upright column 104 which is fixed on the upper surface of the bed 102 on the rear end side of the bed 102 (the right side in FIG. 1), an X-axis slider 108 which is provided on a front surface of the column 104 so as to be movable in the left and right directions or the X-axis directions (the direction perpendicular to the sheet of the drawing of FIG. 1), and a spindle head 110 which is attached on a front surface of the X-axis slider 108 so as to be movable in the upward and downward directions or the Z-axis directions and which rotatably supports a spindle 112. A tool 114 for machining the workpiece W fixed to the table 106 is mounted on the tip of the spindle 112. Note that the machine tool may be a horizontal machining center.

The machine tool 100 further comprises an operation panel 120 with which an operator can operate the machine tool 100. The operation panel 120 comprises a touch panel 122 serving as the display part with which a desired portion can be selected by touching a screen. Individual machine tools have security information for accessing the server such as accounts and passwords, or user authentication information. The display of the touch panel 122 is controlled by the controller 130. Specifically, in the present embodiment, the controller 130 of the machine tool 100 constitutes a control part of the electronic manual. The controller 130 can be connected to a server on which the most recent data of the electronic manual is stored via the Internet (network).

By tapping a search button 12 in the main window 10, a search window 20 opens. The search window 20 includes a plurality of items corresponding to major items in the table of contents of a paper instruction manual. When the operator selects and taps one item from the plurality of items, a search method selection window 24 with which the operator can select a search method from a plurality of search methods for searching the information related to the selected item opens.

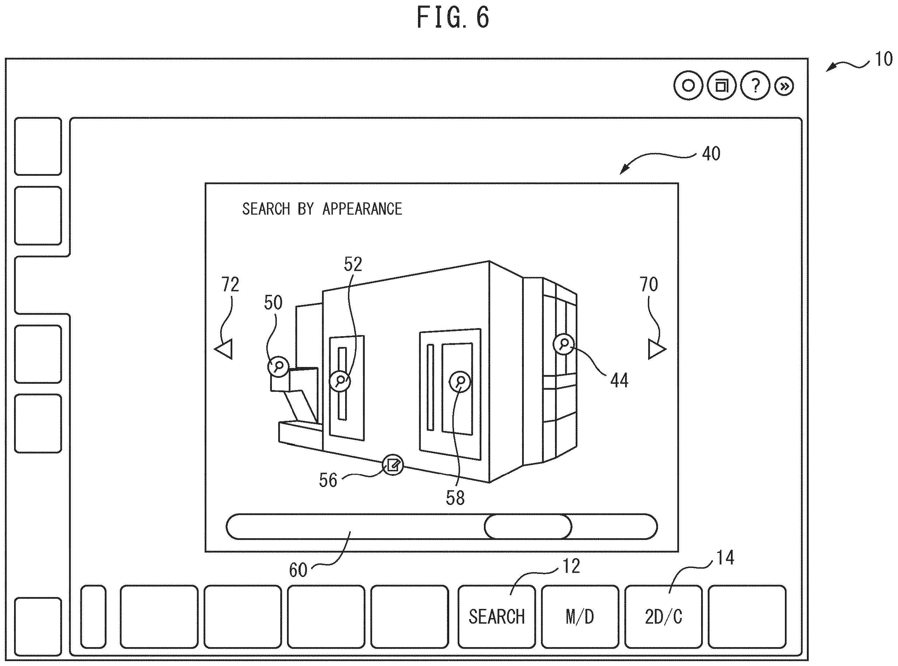

For example, when preventative safety item 22 is selected and tapped, the search method selection window 24 related to preventative safety of the machine tool 100 opens, as shown in FIG. 6. The search method selection window 24 includes a time search button 26 for searching by time, an appearance search button 28 for searching based on the appearance of the machine tool 100, a unit search button 30 for searching based on the units constituting the machine tool 100, an index button 32 for searching by keyword, and a movie search button 34 for searching video files explaining inspection methods and methods for replacing parts by means of a video. A similar search method selection window is opened when another item is selected.

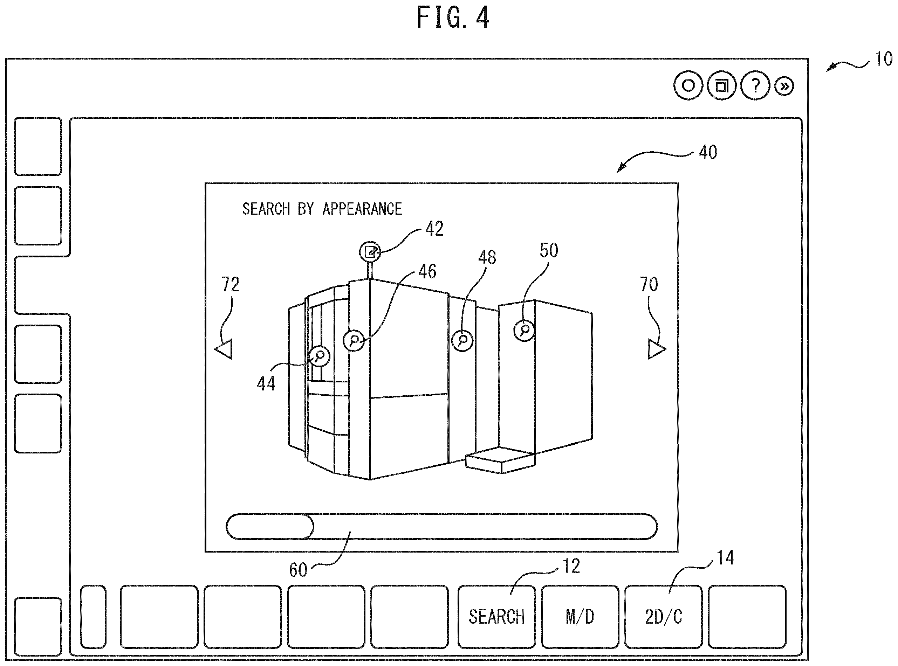

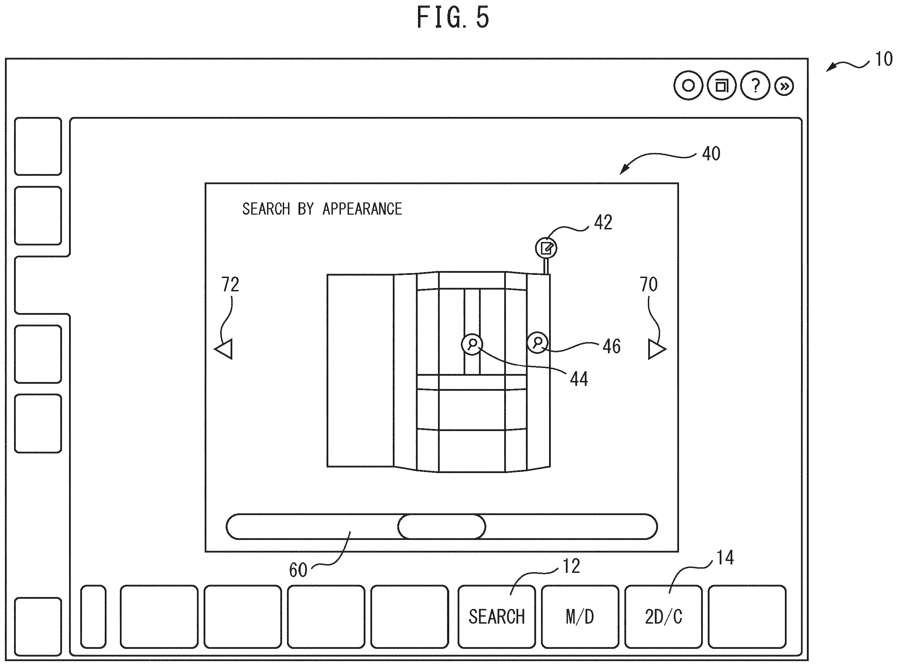

When the operator selects and taps the appearance search button 28 in the search method selection window 24, the appearance search window 40, as shown in FIGS. 4 to 7, opens. The appearance of the machine tool 100 is displayed on the appearance search window 40 and point icons 42 to 58 are displayed on each component of the displayed machine tool 100. The image of the machine tool displayed on the appearance search window 40 can be a photograph of the actual machine tool or can be a 3D model. In FIGS. 4 to 7, the machine tool 100 is covered by a cover.

A right rotation button 70 and a left rotation button 72 are displayed on the appearance search window 40, and by rotating the rotation buttons 70, 72, the machine tool displayed in the appearance search window 40 rotates. For example, if the right rotation button 70 of FIG. 4 is tapped, the machine tool in the appearance search window 40 rotates to the right, and the slide bar 60 slides to the right in accordance with the rotational position.

The point icons 42, 56 are handling instruction display point icons and the point icons 44 to 52, 58 are internal display point icons. The handling instruction display point icons and the internal display point icons can have different designs and/or colors so that the operator can visually distinguish between them. In the examples of FIGS. 4 to 7, handling instruction display point icons 42, 56 for displaying "signal light" and "oil pan" handling instructions are shown.

Furthermore, in the examples of FIGS. 4 to 7, internal display point icons 44, 46, 50, 52, 56 for displaying "pallet loading station", "interior of machining chamber", "interior of swarf discharge conveyor", "interior of column chamber" and "interior of tool magazine" are shown.

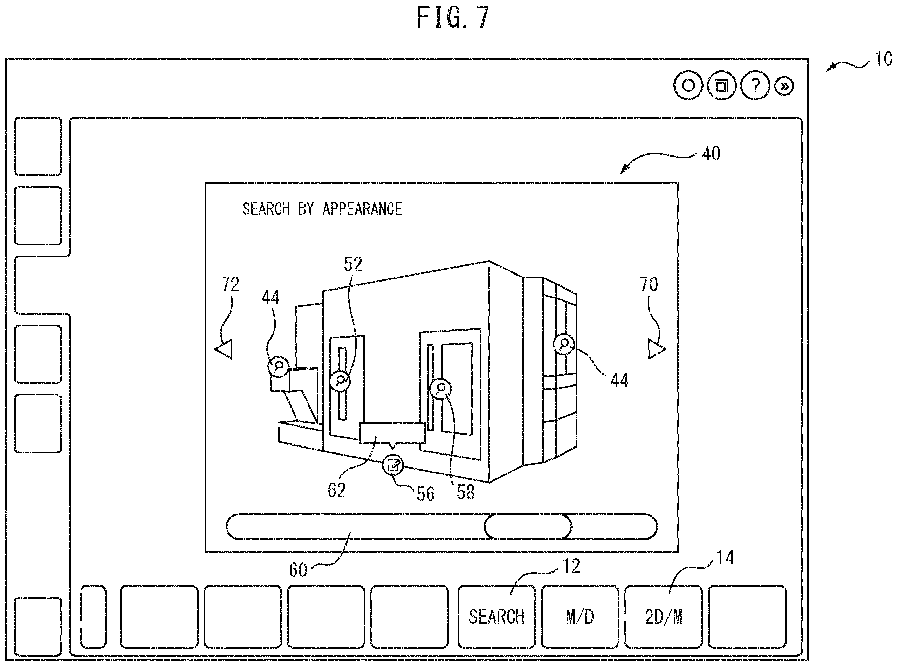

When a handling instruction display point icon is tapped, handling instructions or a list of handling instructions related to the part of the machine tool 100 represented by the point icon are displayed on the touch panel 122. For example, when the handling instruction display point icon 56 for the oil pan is tapped one time, a dialog bubble 62 (FIG. 7) is displayed. "Oil pan cleaning" is displayed in the dialog bubble 62 as a list of handling instructions, and when the handling instruction display point icon 56 is tapped, handling instructions related to a method for cleaning the oil pan are displayed. In the example of FIG. 7, though the list of handling instructions includes only "oil pan cleaning", a plurality of items can be included.

When the handling instruction display point icon 56 is tapped again, a method for cleaning the oil pan, such as "(1) turn off power, (2) remove oil pan, (3) remove swarf and cutting oil deposited in the oil pan, and (4) return oil pan to original position" is displayed. The handling instructions are not limited to text and explanation may be given by means of illustrations. Further, a method for cleaning the oil pan may be given by means of a video.

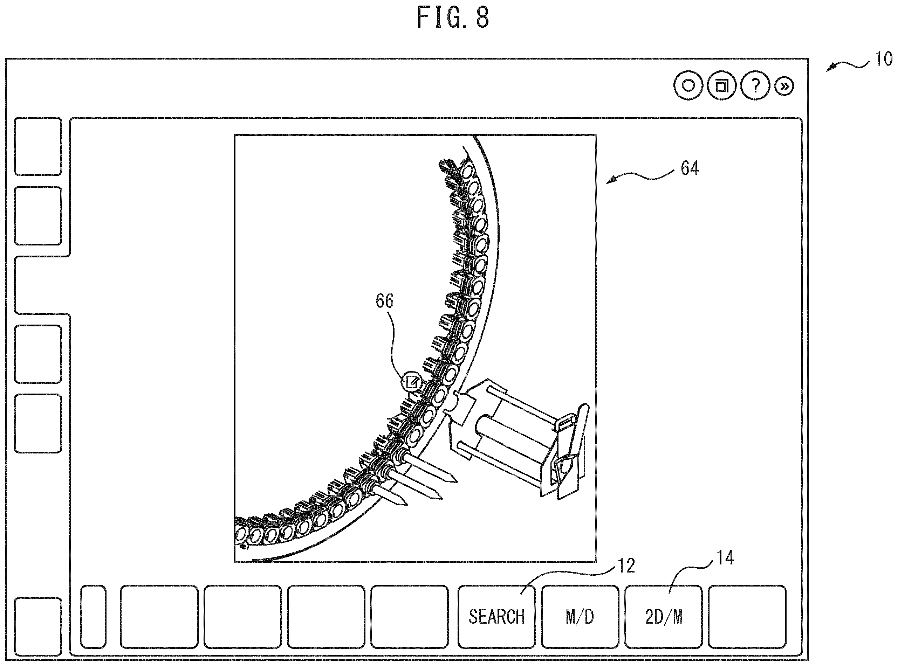

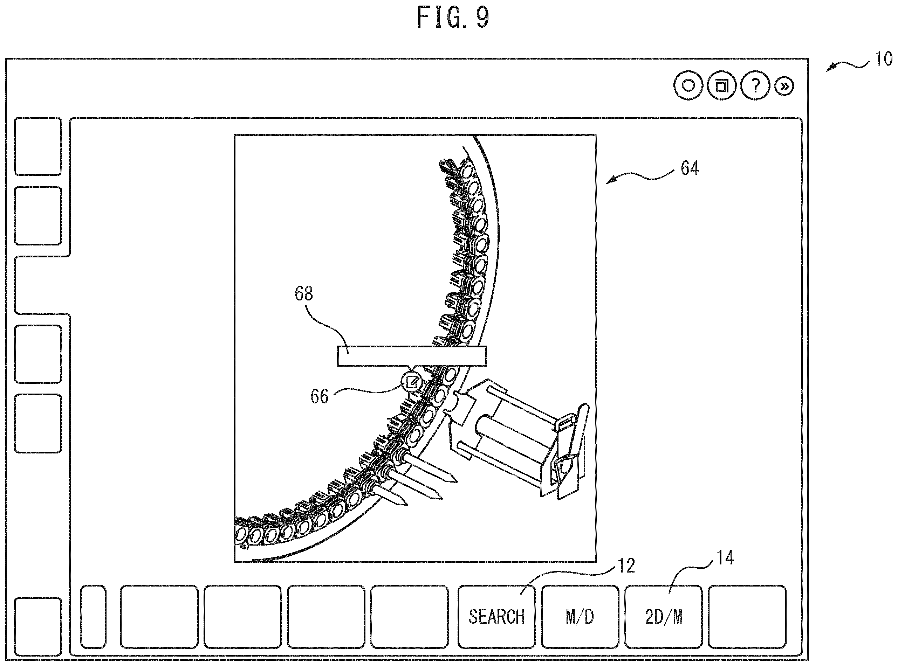

When an internal display point icon is tapped, an image of the interior of the part of the machine tool 100 represented by the point icon is displayed on the touch panel 122. For example, when the internal display point icon 58 of the tool magazine is tapped, an image 64 of the interior of the tool magazine, as shown in FIGS. 8 and 9, is displayed. The handling instruction display point icon 66 is displayed near the tool shank and the tool pot in the image 64 of the interior of the tool magazine. When the handling instruction display point icon 66 is tapped, a dialog bubble 68 representing the handling instruction display point icon 66, as shown in FIG. 9, is displayed. "Tool shank inspection/cleaning and tool pot inspection" is displayed in the dialog bubble 68, and when the handling instruction display point icon 66 is tapped, handing instructions related to a method for the inspection/cleaning of the tool shank and the inspection of the tool pot are displayed.

When the handling display instruction point icon 66 is tapped, a method for the inspection and cleaning of the tool shank and a method for the inspection of the tool pot, such as "(1) turn off power, (2) remove swarf and cutting oil in tool pot, (3) confirm presence or absence of damage to tool pot and tool pot key, (4) inspect each part of tools such as the tapered part of the tool holder, the end face of the pull stud, the clamp face, the end face (in the case of a 7/24 taper specification), or, the tapered part of the tool holder, the tool clamping portion, the clamping surface, the coolant duct (in the case of an HSK specification), and (5) inspect O-rings of tool shank and replace O-rings if scratched or cracked" is shown. The handling instructions are not limited to text information, and explanation may be given by means of illustrations. Further, a method for the inspection and cleaning of the tool shank and a method for the inspection of the tool pot may be given by means of a video.

Furthermore, when a handling instruction display point icon is tapped and a handling instruction is displayed, by tapping the two-dimensional code generation button 14, a two-dimensional code may be displayed on the touch panel 122. By reading this two-dimensional code with a mobile terminal (not illustrated), information can be displayed on the mobile terminal via the Internet. The two-dimensional code can include a URL or security information necessary for the mobile terminal to access the server on which the electronic manual is stored, as well as the above malfunction items and periodic inspection items. Furthermore, the mobile terminal can be a commercially available smartphone or tablet, rather than a special device provided by the manufacturer of the machine tool 100.

Furthermore, when a malfunction occurs in a component of the machine tool 100, an alarm is generated, and the color of the handling instruction display point icon corresponding to the component in which the malfunction has occurred can change colors or flash. Further, when a periodic inspection interval of the machine tool 100, such as a 160-hour inspection, 500-hour inspection, 1000-hour inspection, 6-month inspection, 1-year inspection, or 2-year inspection, arrives, the color of the corresponding handling instruction display point icon can change or flash.

Further, the display can be switched to display only point icons corresponding to malfunctions or only point icons of periodic inspection intervals. As a result, the display can be narrowed to point icons that coincide with the purpose of the operator, and the operator can easily reach the desired point icon.

According to the present embodiment, even if an operator, who is not familiar with the handling of the machine tool and/or the instruction manual, is not familiar with the unique names of the parts of the machine tool, by displaying the appearance of the machine tool, displaying point icons on each component thereof, and tapping a point icon, necessary information related to the handling of the machine tool can be obtained.

### REFERENCE SIGNS LIST

- 10: Main Window
- 12: Search Button
- 14: Two-Dimensional Code Generation Button
- 20: Search Window
- 22: Item
- 24: Search Method Selection Window
- 26: Time Search Button
- 30: Unit Search Button
- 32: Index Button
- 34: Movie Search Button
- 40: Appearance Search Window
- 42, 56, 66: Handling Instruction Display Point Icon
- 44, 46, 48, 50, 52, 58: Internal Display Point Icon
- 60: Slide Bar
- 64: Image
- 66: Handling Instruction Display Point Icon
- 70: Right Rotation Button
- 72: Left Rotation Button
- 100: Machine Tool
- 120: Operation Board
- 122: Touch Panel
- 130: Controller

## Claims

1. An electronic manual for a machine tool (100) for providing information regarding handling of the machine tool (100) to an operator, comprising:
a display part (122) configured to display an image of the machine tool (100) including a first handling instruction display point icon (42, 56) and an internal display point icon (44, 46, 48, 50, 52, 58) on parts of the displayed machine tool (100), and
a control part (130) configured to control the display part (122) such that, when the first handling instruction display point icon (42, 56) is selected, handling instructions or a list of handling instructions corresponding to the part of the machine tool (100) represented by the first handling instruction display point icon (52, 56) are displayed on the display part (122), and, such that when the internal display point icon (44, 46, 48, 50, 52, 58) is selected, an image of the interior of the part of the machine tool (100) represented by the internal display point icon (44, 46, 48, 50, 52, 58) is displayed on the display part (122),
wherein the control part (130) is configured to control the display part (122) such that, when the internal display point icon (44, 46, 48, 50, 52, 58) is selected, a second handling instruction display point icon (66) is displayed on the display part (122) near the image of the interior of the part of the machine tool (100), and
wherein the control part (130) is configured to control the display part (122) such that, when the second handling instruction display point icon (66) is selected, handling instructions or a list of handling instructions corresponding to the part of the machine tool (100) represented by the second handling instruction display point icon (66) are displayed on the display part (122).

2. The electronic manual for a machine tool (100) according to claim 1, wherein the electronic manual is configured such that when the control part (130) receives information regarding a periodic inspection interval or a malfunction of each component of the machine tool (100) from the machine tool (100), the control part (130) changes the color of the handling instruction display point icon (52, 56) corresponding to the component.

3. The electronic manual for a machine tool (100) according to claim 1, further comprising a server which is connected to the control part (130) through a network circuit and in which the data of the electronic manual is stored, the control part (130) being configured to transmit information regarding a point icon selected by the operator and information regarding the machine tool (100) to the server, and acquire data corresponding to the information regarding the point icon and information regarding the machine tool (100) from the server.

## Patentansprüche

1. Elektronisches Handbuch für eine Werkzeugmaschine (100) zum Bereitstellen von Informationen bezüglich einer Handhabung der Werkzeugmaschine (100) für einen Bediener, umfassend:
ein Anzeigeteil (122), das so konfiguriert ist, dass es ein Bild der Werkzeugmaschine (100) mit einem ersten Handhabungsanweisungs-Anzeigepunktsymbol (42, 56) und einem internen Anzeigepunktsymbol (44, 46, 48, 50, 52, 58) auf Teilen der angezeigten Werkzeugmaschine (100) anzeigt, und
ein Steuerteil (130), das so konfiguriert ist, dass es den Anzeigeteil (122) so steuert, dass, wenn das Handhabungsanweisungs-Anzeigepunktsymbol (42, 56) ausgewählt wird, Handhabungsanweisungen oder eine Liste von Handhabungsanweisungen, die dem Teil der Werkzeugmaschine (100) entsprechen, der durch das erste Handhabungsanweisungs-Anzeigepunktsymbol (52, 56) dargestellt wird, auf dem Anzeigeteil (122) angezeigt werden, und so, dass, wenn das interne Anzeigepunktsymbol (44, 46, 48, 50, 52, 58) ausgewählt wird, ein Bild des Inneren des Teils der Werkzeugmaschine (100), der durch das interne Anzeigepunktsymbol (44, 46, 48, 50, 52, 58) dargestellt wird, auf dem Anzeigeteil (122) angezeigt wird,
wobei das Steuerteil (130) so konfiguriert ist, dass es den Anzeigeteil (122) so steuert, dass, wenn das interne Anzeigepunktsymbol (44, 46, 48, 50, 52, 58) ausgewählt wird, ein zweites Handhabungsanweisungs-Anzeigepunktsymbol (66) auf dem Anzeigeteil (122) in der Nähe des Bildes des Inneren des Teils der Werkzeugmaschine (100) angezeigt wird, und
wobei das Steuerteil (130) so konfiguriert ist, dass es den Anzeigeteil (122) so steuert, dass, wenn das zweite Handhabungsanweisungs-Anzeigepunktsymbol (66) ausgewählt wird, Handhabungsanweisungen oder eine Liste von Handhabungsanweisungen, die dem durch das zweite Handhabungsanweisungs-Anzeigepunktsymbol (66) dargestellten Teil der Werkzeugmaschine (100) entsprechen, auf dem Anzeigeteil (122) angezeigt werden.

2. Elektronisches Handbuch für eine Werkzeugmaschine (100) nach Anspruch 1, wobei das elektronische Handbuch so konfiguriert ist, dass, wenn das Steuerteil (130) Informationen bezüglich eines periodischen Inspektionsintervalls oder einer Fehlfunktion jeder Komponente der Werkzeugmaschine (100) von der Werkzeugmaschine (100) empfängt, das Steuerteil (130) die Farbe des Handhabungsanweisungs-Anzeigepunktsymbol (52, 56) entsprechend der Komponente ändert.

3. Elektronisches Handbuch für eine Werkzeugmaschine (100) nach Anspruch 1, ferner umfassend einen Server, der mit dem Steuerteil (130) über eine Netzwerkschaltung verbunden ist und in dem die Daten des elektronischen Handbuchs gespeichert sind, wobei das Steuerteil (130) so konfiguriert ist, dass es Informationen bezüglich eines vom Bediener ausgewählten Punktsymbols und Informationen bezüglich der Werkzeugmaschine (100) an den Server überträgt und Daten, die den Informationen bezüglich des Punktsymbols und Informationen bezüglich der Werkzeugmaschine (100) entsprechen, vom Server erhält.

## Revendications

1. Manuel électronique pour une machine-outil (100) destiné à fournir des informations concernant la manipulation de la machine-outil (100) à un opérateur, comprenant :
une partie d'affichage (122) configurée pour afficher une image de la machine-outil (100) incluant une première icône de point d'affichage d'instruction de manipulation (42, 56) et une icône de point d'affichage interne (44, 46, 48, 50, 52, 58) sur des parties de la machine-outil affichée (100), et
une partie commande (130) configurée pour commander la partie affichage (122) de sorte que, lorsque la première icône de point d'affichage d'instruction de manipulation (42, 56) est sélectionnée, les instructions de manipulation ou une liste d'instructions de manipulation correspondant à la partie de la machine-outil (100) représentée par la première icône de point d'affichage d'instruction de manipulation (52, 56) sont affichées sur la partie d'affichage (122) et, de sorte que, lorsque l'icône de point d'affichage interne (44, 46, 48, 50, 52, 58) est sélectionnée, une image de l'intérieur de la partie de la machine-outil (100) représentée par l'icône de point d'affichage interne (44, 46, 48, 50, 52, 58) est affichée sur la partie d'affichage (122),
dans lequel la partie commande (130) est configurée pour commander la partie affichage (122) de sorte que, lorsque l'icône de point d'affichage interne (44, 46, 48, 50, 52, 58) est sélectionnée, une seconde icône de point d'affichage d'instruction de manipulation (66) est affichée sur la partie affichage (122) à proximité de l'image de l'intérieur de la partie de la machine-outil (100), et
dans lequel la partie commande (130) est configurée pour commander la partie affichage (122) de sorte que, lorsque la deuxième icône de point d'affichage d'instruction de manipulation (66) est sélectionnée, les instructions de manipulation ou une liste d'instructions de manipulation correspondant à la partie de la machine-outil (100) représentée par la deuxième icône de point d'affichage de consigne de manipulation (66) sont affichées sur la partie affichage (122).

2. Manuel électronique pour une machine-outil (100) selon la revendication 1, dans lequel le manuel électronique est configuré de telle sorte que lorsque la partie commande (130) reçoit de la machine-outil (100) des informations concernant un intervalle d'inspection périodique ou un dysfonctionnement de chaque composant de la machine-outil (100), la partie commande (130) change la couleur de l'icône du point d'affichage de l'instruction de manipulation (52, 56) correspondant au composant.

3. Manuel électronique pour une machine-outil (100) selon la revendication 1, comprenant en outre un serveur qui est connecté à la partie commande (130) par un circuit de réseau et dans lequel les données du manuel électronique sont stockées, la partie commande (130) étant configurée pour transmettre au serveur des informations concernant une icône de point sélectionnée par l'opérateur et des informations concernant la machine-outil (100), et pour acquérir des données correspondant aux informations concernant l'icône de point et des informations concernant la machine-outil (100) à partir du serveur.
